# EUROPEAN PATENT APPLICATION

(11) **EP 2 724 989 A1**
(43) Date of publication of application: **30.04.2014**
(21) Application number: 11868122.0
(22) Date of filing: 24.06.2011
(51) Int. Cl.: C02F 5/00

(54) **SCALE REMOVAL METHOD AND SCALE REMOVAL DEVICE**

(71) Applicant: Mitsubishi Electric Corporation, Tokyo 100-8310 (JP)
(72) Inventor: KAMIYA, Toshiyuki, Tokyo 100-8310 (JP); SAITO, Tadashi, Tokyo 100-8310 (JP); MIYA, Kazuhiro, Tokyo 100-8310 (JP); FURUKAWA, Seiji, Tokyo 100-8310 (JP)
(74) Representative: Sajda, Wolf E.
(86) International application number: PCT/JP2011/064504
(87) International publication number: WO 2012/176325

(57) **Abstract**

In a heating device (1002), a scale trapping unit (109) that accommodates an attaching body (7) with superior affinity for scale particles is set in a water circuit (400) including a heat exchanger (108), and the scale particles contained in heated water flowing out from the heat exchanger (108) are caused to attach to the attaching body (7). The attaching body (7) is kept at a high temperature so that the scale particles do not only attach to the surface of the attaching body but also form crystals on the surface of the attaching body. Namely, not only scale particles with a large particle size and large sedimentary properties but also fine scale particles with small sedimentary properties are trapped. During a period where heating is not carried out, tap water is fed from a tap water feed pipe (111) to the scale trapping unit (109) in order to peel the trapped scale from the attaching body (7). The peeled scale is discharged from the water circuit (400) through a scale discharge pipe (112). The trapping ability of the attaching body (7) is thus maintained for a long period of time.

## Description

### Technical Field

The present invention relates to a scale removal device and scale removal method having a function of suppressing scale attaching to a heat exchanger. For example, the present invention relates to a water heater to which a scale removal method or scale removal device is applied.

### Background Art

Among water heaters that feed hot water to a bathroom or kitchen, a heat pump type water heater includes a heat exchanger serving to transfer heat to water. As the heat exchanger transfers heat to water, it is important to maintain a heat transfer surface in a clean state. When a wall surface is dirty, the heat transfer surface area decreases or the heat conduction degrades, decreasing the heat transfer performance. Dirt, when accumulated, may clog the flow channel.

In a district where the content of hardness component (calcium ions or magnesium ions) in water is high, carbonate crystals of calcium or magnesium, so-called scale are attached to the inner side of the heat exchanger, causing inconveniences such as a decrease in heat transfer performance and a clogged flow channel described above.

According to one possible mechanism that causes attaching of a hardness component existing in an ionic state in water as a scale, molecules of calcium carbonate and the like precipitate on a high-temperature surface such as the heat transfer surface of the heat exchanger, and scale crystal growth progresses on the molecule surface serving as a nucleus.

During a heating process, molecules of calcium carbonate and the like precipitate in water as well. The precipitated scale components (to be referred to as scale particles hereinafter) exist in water in a suspending state.

Hence, scale crystal growth progresses when ions and scale particles in water couple with the nucleus precipitated on the high-temperature surface. If heated water is introduced into the heat exchanger again and is further heated, the probability of collision of the scale particles in water with the nucleus increases, thus promoting crystal growth. Therefore, to suppress the crystal growth in the heat exchanger, it is effective to remove the scale particles precipitated in water from water so that the scale particles will not be introduced into the heat exchanger again.

Regarding separation of the scale particles from water, for example, Patent Literature 1 proposes a countermeasure. Fig. 1 of Patent Literature 1 discloses a technique in which a heat exchanger is provided with a scale reservoir body 7 at its subsequent stage. The scale particles are allowed to deposit in a scale reservoir 6 in the lower portion of the scale reservoir body due to the weight of the scales and the water flow, so that the scale particles are removed from water.

### Citation List

### Patent Literature

Patent Literature 1:
Japanese Unexamined Patent Application Publication
JP-A-2008-190 780

### Summary of Invention

### Technical Problem

Patent Literature 1 mainly utilizes the sedimentary properties of the scales in order to remove the scale particles from water. In general, the larger the particle size, the higher the particle sedimentation speed. Accordingly, this scheme can remove scale particles with larger particle sizes from water. If the scale particles are fine particles with small particle sizes, however, the sedimentation speed is low, and it is difficult to remove the fine scale particles sufficiently. Consequently, there is a problem that crystal growth resulted by the fine scale particles cannot be suppressed.

It is an object of the present invention to provide a method and device for suppressing scale attaching to a heat exchanger used in a heat pump water heater or the like, by removing not only scale particles having a large particle size, that is, scale particles with large sedimentary properties, but also fine scale particles with small sedimentary properties, from water.

### Solution to Problem

A scale removal method according to the present invention includes:
an attaching step of returning, to a water reserving tank, heated water that has been heated upon flowing into a heat exchange device from a water reserving tank and that has flowed out of the heat exchange device and is returning to the tank, by causing the heated water to pass through a storage container that stores a scale attaching body having a function of letting a scale attach thereto, thereby attaching the scale contained in the heated water to the scale attaching body.

### Advantageous Effects of Invention

According to the present invention, an attaching body in a high temperature state is introduced into a water circuit, and scale particles including fine scale particles having small sedimentary properties are removed from water, so that scale attaching to the heat exchange device can be reduced, thereby preventing a decrease in heat transfer performance.

### Brief Description of Drawings

- Fig. 1: is a graph showing a scale attaching amount and reduction amount in Experiment 1.
- Fig. 2: is a graph showing the temperature of a scale trapping container and a scale reduction rate in Experiment 2.
- Fig. 3: is a graph showing a scale reduction rate in Experiment 3.
- Fig. 4: is a schematic diagram of a heating device 1001 in Embodiment 1.
- Fig. 5: is a schematic diagram of a heating device 1002 in Embodiment 2.
- Fig. 6: is a schematic diagram of a heating device 1003 in Embodiment 3.
- Fig. 7: is a schematic diagram of a heating device 1004 in Embodiment 4.
- Fig. 8: is a diagram of a scale trapping unit 109-6 in Embodiment 6.
- Fig. 9: is a diagram of a scale trapping unit 109-7 in Embodiment 7.
- Fig. 10: is a transparent perspective view of the scale trapping unit 109-7 in Embodiment 7.
- Fig. 11: is a diagram of a scale trapping unit 109-81 in Embodiment 8.
- Fig. 12: is a diagram of a scale trapping unit 109-82 in Embodiment 8.
- Fig. 13: is a diagram of a scale trapping unit 109-83 in Embodiment 8.
- Fig. 14: is a plan view of the scale trapping unit 109-83 in Embodiment 8.
- Fig. 15: is a schematic diagram of a scale trapping unit 109-91 in Embodiment 9.
- Fig. 16: is a schematic diagram of a scale trapping unit 109-92 in Embodiment 9.
- Fig. 17: is a schematic diagram of a scale trapping unit 109-10 in Embodiment 10.
- Fig. 18: is a schematic diagram of a scale trapping unit 109-11 in Embodiment 11.
- Fig. 19: is a transparent perspective view of the scale trapping unit 109-11 in Embodiment 11.
- Fig. 20: is a diagram of a scale trapping unit 109-12 in Embodiment 12.
- Fig. 21: is a diagram of a scale trapping unit 109-13 in Embodiment 13.
- Fig. 22: is a plan view of the scale trapping unit 109-13 in Embodiment 13.
- Fig. 23: is a diagram of a scale trapping unit 109-14 in Embodiment 14.

### Description of Embodiments

The following embodiments describe scale removal methods and scale removal devices that remove scale from hot water heated by a heat exchanger (heat exchange device). According to the scale removal methods and scale removing devices to be described below, an attaching body with superior affinity for scale particles is disposed in a water circuit including a heat exchanger, and scale particles are allowed to attach to the attaching body.

Furthermore, the attaching body is maintained in a high temperature state, so that the scales are trapped while the scale particles are allowed not only to attach to the surface of the attaching body but also to form crystals on the surface of the attaching body. During a period where heating is not carried out, the trapped scales are peeled from the attaching body, and the peeled scales are discharged from the water circuit.

In the initial part of the following description, Experiments 1 to 3 on which the scale removal method (or the scale removal device) is based will be described, and in the subsequent part, Embodiments 1 to 15 will be described. The outline of the Experiments and Embodiments is as follows.

Experiments 1 to 3
(1) Experiment 1: Experiment 1 indicates the effectiveness of scale trapping in a case where the attaching body is employed.
(2) Experiment 2: Experiment 2 shows a case where the number of target temperatures is increased as compared to Experiment 1.
(3) Experiment 3: Experiment 3 indicates the effect of cleaning the attaching body as compared to Experiment 1.

(1) Embodiment 1 shows a structure of a heating device 1001 that uses a scale trapping unit.
(2) Embodiment 2 shows a structure of a heating device 1002 that uses a scale trapping unit. In Embodiment 2, as compared to Embodiment 1, a tap water feed pipe 111, a scale discharge pipe 112, and the like are connected to the scale trapping unit. In the heating device 1002, an attaching body 7 can be cleaned, and scales peeled by cleaning can be discharged.
(3) Embodiment 3 shows a structure of a heating device 1003 that uses a scale trapping unit. In Embodiment 3, as compared to Embodiment 2, tap water from the scale discharge pipe 112 is utilized.
(4) Embodiment 4 shows a structure of a heating device 1004. In Embodiment 4, as compared to Embodiments I to 3, an intermediate circuit 300 through which hot water circulates is present between a heat source 101 and a plate-type heat exchanger 108.
(5) Embodiment 5 relates to a pulsatory operation.

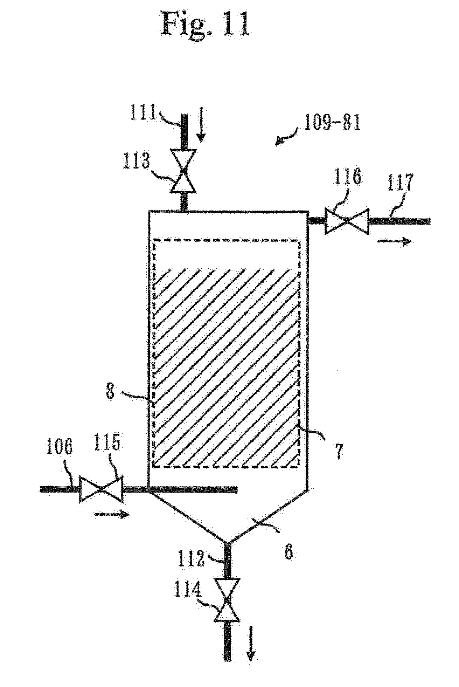

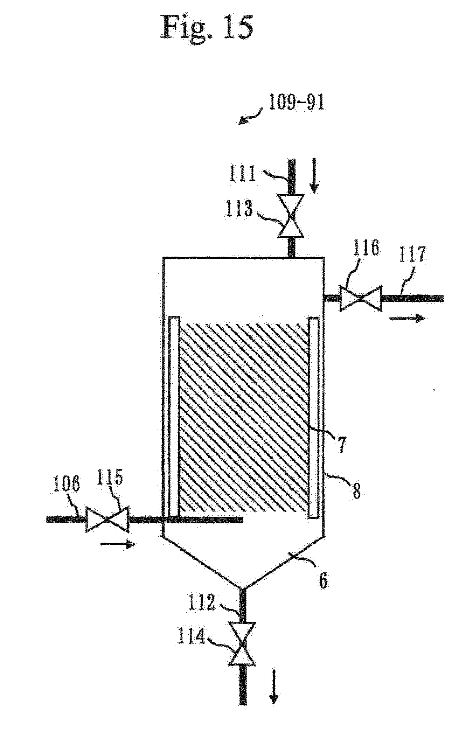

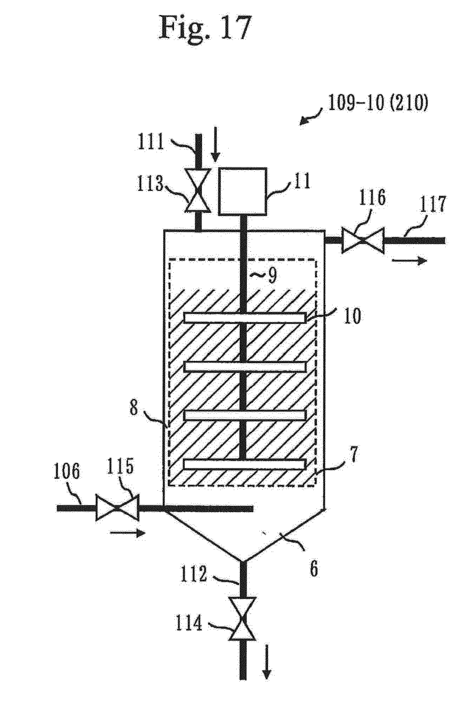

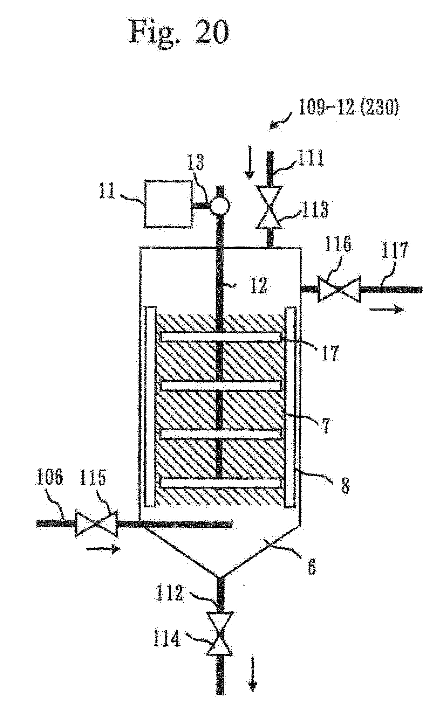

Embodiments 6 to 15 relate to structures of the attaching body 7 and structures of a scale trapping unit 109 that stores the attaching body 7. (6) Embodiment 6 shows a case that uses a particle-type attaching body.
(7) Embodiment 7 shows a case that uses a string-type attaching body.
(8) Embodiment 8 shows a case obtained by adding a scale peeling step and a peeled scale discharge step to Embodiment 6.
(9) Embodiment 9 shows a case obtained by adding a scale peeling step and a peeled scale discharge step to Embodiment 7.
(10) Embodiment 10 shows a structure obtained by adding a peeling mechanism 210 which peels the scales attaching to the attaching body 7, to Embodiment 8 (Fig. 11).
(11) Embodiment 11 shows a structure obtained by adding a peeling mechanism 220 to Embodiment 9 (Fig. 15).
(12) Embodiment 12 shows a structure obtained by adding a peeling mechanism 230 different from that of Embodiment 11, to Embodiment 9 (Fig. 15).
(13) Embodiment 13 shows a structure in which a peeling mechanism 240 is actuated using tap water as the power, as compared to Embodiment 10 (Fig. 17).
(14) Embodiment 14 shows a structure in which a peeling mechanism 250 is actuated using tap water as the power, as compared to Embodiment 12 (Fig. 20).
(15) Embodiment 15 shows variations of the contents described in Embodiments 1 to 14.

### Experiment 1

### Effectiveness of Scale Trapping by Attaching Body, Combination with Pulsation

Experiment 1 serving as the basis of a heating method to be described in the following embodiments will be explained.
Water having
hardness: 300 mg/L,
pH: 7.8,
temperature: 20 °C, and
volume: 200 L
was held in a tank having a capacity of 200 L. A pump and a water circuit for circulating water in the tank through a plate-type heat exchanger were provided. High-temperature water heated by a heater simulated after a heat pump was circulated to the primary side of the plate-type heat exchanger.

Water in the tank was circulated to the secondary side of the plate-type heat exchanger at a flow rate of 20 L/min so that the water in the tank reached 60 °C in about I hour. Defining the proportion of the circulating water amount in a heating period to the tank capacity as the circulation proportion, the circulation proportion is 6 (= (20 L/min x 60 min)/200 L) in this experiment.

As an anti-scale measure of the plate-type heat exchanger, the following provisions were introduced.
(1) Scale Trapping 1: A scale trapping container filled with particle-type silicone rubber as an attaching body was set at a stage subsequent to the plate-type heat exchanger. Water heated by the plate-type heat exchanger was passed through the scale trapping container. This is aimed at causing the scale particles existing in water to attach to the attaching body and trapping the scales while allowing scale crystals to grow on the surface of the attaching body in a high-temperature state.
(2) Scale Trapping 2: This method is similar to a prior art example (JP A-2008-190 780). According to Scale Trapping 2, a scale trapping container not employing an attaching body and provided with a mechanism for reserving scales in the lower portion of the container was set at the stage subsequent to the plate-type heat exchanger. Water heated by the plate-type heat exchanger was passed through the scale trapping container. This is aimed at trapping scale particles existing in water while allowing the scale particles to sediment by their own weight.
(3) Pulsation: An operation was repeated in which the pump flow rate was 20 L/min for 4 sec and 40 L/min for 1 sec. This is aimed at generating a shearing force in the plate-type heat exchanger by instantaneously increasing the flow velocity, so that formation of scale nuclei on the heat transfer surface is prevented and that scales attaching to the heat transfer surface are peeled.

Experiment 1 was conducted under five conditions:
(a) no countermeasure
(b) pulsation
(c) scale trapping 1
(d) scale trapping 1 + pulsation
(e) scale trapping 2 (no attaching body)

The operation continued for about 1 month. Then, the amount of scales attaching to the plate of the plate-type heat exchanger was measured.

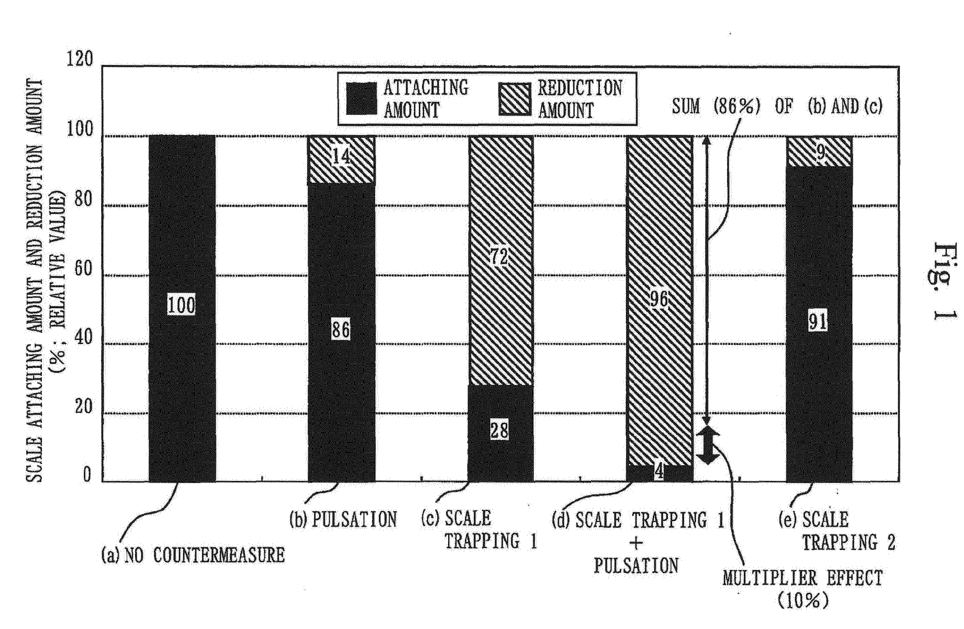

Fig. 1 shows the scale attaching amount and reduction amount under each condition where the scale amount in "(a) no countermeasure was 100 %.
As shown in Fig. 1,
with "(b) pulsation", the reduction rate was as low as 14 %,
with "(c) scale trapping 1", the reduction rate rose to 72 %,
which is greatly larger than the reduction rate of 9 % with "(e) scale trapping 2".
When scale trapping and pulsation were employed in combination,
with "(d) scale trapping 1 + pulsation", the reduction rate was 96 %,
which is larger by further 10 % than the sum (86 %) of the rate obtained with
"(b) pulsation" alone and
the rate obtained with "(c) scale trapping 1" alone.

This result led to finding that when the circulation rate was relatively as large as 6, scale trapping using an "attaching body" is effective as a scale countermeasure, and a multiplier effect that exceeds the sum of two single effects is obtained by the "combination of scale trapping and pulsation".

### Experiment 2

### Influence of Temperature on Scale Trapping I

Another Experiment 2 serving as the basis of the heating method in the following embodiments will be explained. Experiment 2 shows a case where the number of target temperatures was increased as compared to Experiment 1. In Experiment 1, a temperature of 60 °C was to be reached in 1 hour. In Experiment 2, the target temperature was changed to 40 °C, 50°C, 60 °C (the same as in Experiment 1), 70 °C, 80 °C, and 90 °C. The other conditions were the same as those in Experiment 1.
In the same manner as in Experiment 1, water having
hardness: 300 mg/L,
pH: 7.8,
temperature: 20 °C, and
volume: 200 L was held in a tank having a capacity of 200 L. A pump and a water circuit for circulating water in the tank through a plate-type heat exchanger were provided. High-temperature water heated by a heater simulated after a heat pump was circulated to the primary side of the plate-type heat exchanger.
Water in the tank was circulated to the secondary side of the plate-type heat exchanger at a flow rate of 20 L/min so that the water in the tank was heated until reaching a predetermined temperature in about 1 hour. The target temperature was changed to 40 °C, 50 °C, 60 °C, 70 °C, 80 °C, and 90 °C. The temperature in the scale trapping container when each target temperature was reached was measured.

As an anti-scale measure of the plate-type heat exchanger, scale trapping 1 of Experiment 1 was introduced (a scale trapping container filled with particle-type silicone rubber as an attaching body was set at a stage subsequent to the plate-type heat exchanger, and water heated by the plate-type heat exchanger was passed through the scale trapping container). Experiment 2 was conducted under two conditions of with and without the countermeasure. The operation continued for about 1 month. Then, the amount of scales attaching to the plate of the plate-type heat exchanger was measured.

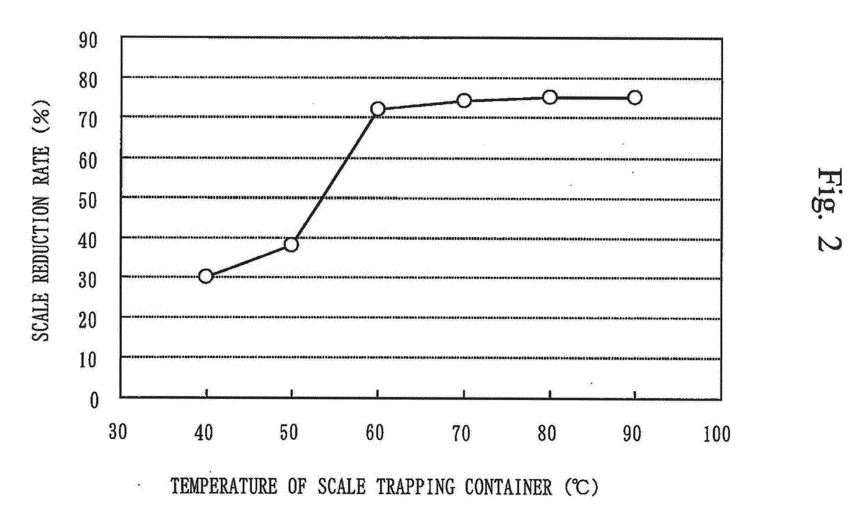

Fig. 2 shows the relationship between the scale reduction rate and the temperature of the scale trapping container of a case where the countermeasure was taken, assuming that the scale amount in a case where no countermeasure was taken was determined as 100 % for each temperature. As shown in Fig. 2, as the temperature of the scale trapping container increased, the scale reduction rate increased. Near 50 °C, the reduction rate was 38 %, while at 60 °C, the reduction rate was as high as 70 % or more.

The reduction rate changed largely between these two temperatures. When the temperature of the scale trapping container was 60 °C or more, the scale reduction rate did not change largely. This result led to finding that in scale trapping using an attaching body, a particularly high scale suppressing effect was obtained when the temperature of the trapping container was 50 °C or more.

### Experiment 3

### Regenerating Effect by Cleaning Attaching Body

Another Experiment 3 serving as the basis of the heating method in the following embodiments will be explained.

Experiment 3 indicates the effect of cleaning the attaching body as compared to Experiment 1.

In the same manner as in Experiment 1, water having
hardness: 300 mg/L,
pH: 7.8,
temperature: 20 °C, and
volume: 200 L was held in a tank having a capacity of 200 L. A pump and a water circuit for circulating water in the tank through a plate-type heat exchanger were provided. High-temperature water heated by a heater simulated after a heat pump was circulated to the primary side of the plate-type heat exchanger. Water in the tank was circulated to the secondary side of the plate-type heat exchanger at a flow rate of 20 L/min so that the water in the tank was heated to about 60 °C in about 1 hour.

As an anti-scale measure of the plate-type heat exchanger, scale trapping 1 of Experiment 1 was introduced (a scale trapping container filled with particle-type silicone rubber as an attaching body was set at a stage subsequent to the plate-type heat exchanger, and water heated by the plate-type heat exchanger was passed through the scale trapping container).

A step was added, of cleaning silicone rubber in the container during a period where heating is not carried out, by introducing tap water into the container filled with silicone rubber at a flow rate of 40 L/min in a direction opposite to the direction during heating. Tap water used for cleaning was not returned to the tank but was drained entirely after passing through the scale trapping container.

Experiment 3 was conducted under two conditions of with and without cleaning described above when 1 month passed since the operation was started. The operation continued for 4 months. Then, the amount of scales attaching to the plate of the plate-type heat exchanger was measured.

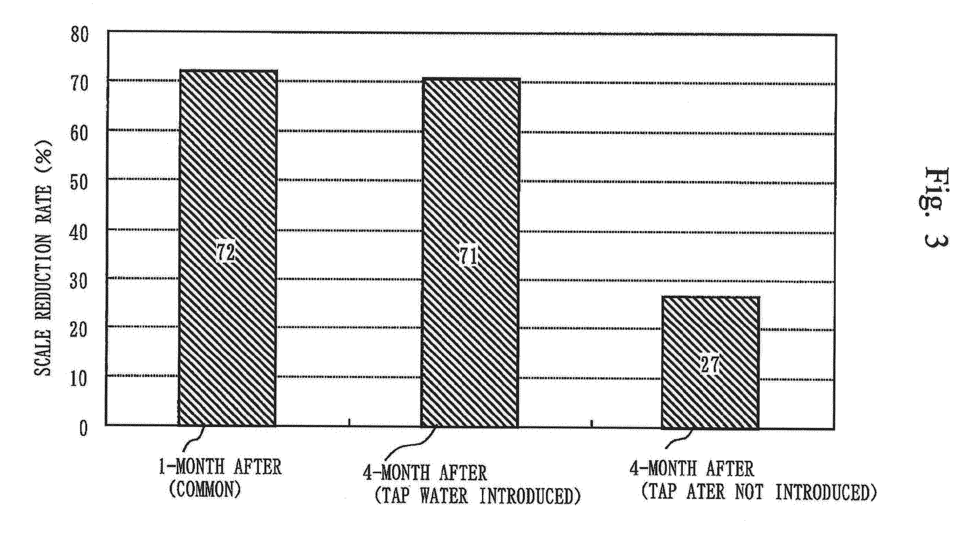

Fig. 3 shows the scale reduction rate under each condition, as well as the result obtained when the operation continued for 1 month, which corresponds to the start of the cleaning step. As shown in Fig. 3, when cleaning was not conducted, the scale reduction rate was 72 % after the 1-month operation, and decreased to 27 % after the 4-month operation. When cleaning was conducted, the reduction rate was maintained at 71 % after the 4-month operation.

The result of Fig. 3 led to finding that in scale trapping using an attaching body, it was effective for a long-term operation to peel the trapped scale from the attaching body by, for example, introducing tap water periodically, and to discharge the peeled scales to the outside of the water circuit.

### Embodiment 1

### Structure of Entire Device: Attaching Body will be Exchanged

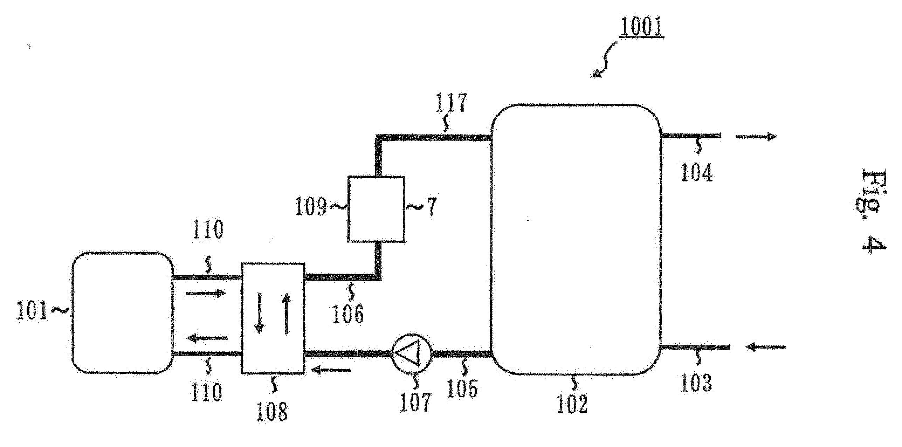

Embodiment 1 will be described with reference to Fig. 4. Embodiment 1 shows a structure of the heating device 1001 that uses a scale trapping unit 109. In Embodiments 1 to 15, a control device (not shown) controls the respective devices.

In the following Embodiments 1 to 15, the temperature of heated water flowing from a plate-type heat exchanger 108 (to be referred to as heat exchanger 108 as well hereinafter) into the scale trapping unit 109 is equal to or higher than a predetermined temperature (based on Experiment 2), for example, 50 °C or more.

Fig. 4 shows a schematic structure of the heating device 1001 of Embodiment 1. The structure of the heating device 1001 will be initially described. As shown in Fig. 4, a heat source 101 and the primary side of the heat exchanger 108 are connected by a circulation pipe 110. A hot water tank 102, the secondary side of the plate-type heat exchanger 108, and the scale trapping unit 109 are connected to each other by a heat exchanger inlet pipe 105, a scale trapping unit inlet pipe 106, and a scale trapping unit outlet pipe 117.

A circulation pump 107 is provided to the heat exchanger inlet pipe 105. A tap water pipe 103 and a hot water pipe 104 are provided to the hot water tank 102. As an attaching body 7, particle-type silicone rubber fills the scale trapping unit 109.

The operating action of the heating device 1001 will be described with reference to Fig.4. Tap water is introduced from the tap water pipe 103 to the hot water tank 102. When the hot water tank 102 becomes full, the heat source 101 is operated to circulate a high-temperature refrigerant through the circulation pipe 110. At the same time, the circulation pump 107 is actuated to feed water in the hot water tank 102 to the plate-type heat exchanger 108 through the heat exchanger inlet pipe 105.

The water exchanges heat with the refrigerant and is heated. The water from the plate-type heat exchanger 108 is introduced to the scale trapping unit 109 through the scale trapping unit inlet pipe 106. The water was brought into contact with the attaching body 7 in the scale trapping unit (attaching step). The water from the scale trapping unit is returned to the hot water tank 102 through the scale trapping unit outlet pipe 117.

Circulation of the refrigerant and circulation of the water in the hot water tank 102 are continued until the water in the hot water tank 102 reaches a predetermined temperature. When heating is ended, the water in the hot water tank 102 is used as hot water when necessary through the hot water pipe 104.

When heating the water in the hot water tank 102 by the plate-type heat exchanger 108 in this manner, due to heating, scale particles are formed in the high-temperature water running from the plate-type heat exchanger 108. If the scale particles are returned to the hot water tank 102 directly, they will be introduced into the heat exchanger 108, promoting scale attaching inside the heat exchanger 108.

If, however, a scale trapping unit is provided to the stage subsequent to the heat exchanger 108 and water containing scale particles is passed through the scale trapping unit while being in contact with the attaching body as in Embodiment 1, the scale particles in the water are caused to attach to the surface of the attaching body, thereby removing the scale particles from the water.

Furthermore, since the water is passed through the scale trapping unit while maintaining the attaching body at a high temperature, crystallization of the scales can be promoted. Namely, a phenomenon (crystal growth on the surface of the attaching body) can be promoted that the scale particles in the water come into contact with the scales attaching to the attaching body and are trapped by the scales, thus forming scale crystals.

### Attaching and Crystallization

Hence, instead of mere "attaching", two functions of "attaching" and "crystallization" allow trapping the scale particles existing in the water with the attaching body, so that the scale particles can be removed from the water. As a result, scale attaching to the heat exchanger 108 can be reduced more largely than with a conventional scale trapping unit where attaching or crystallization does not occur. The heat transfer performance of the heat exchanger 108 can thus be maintained.

When the trapping ability of the attaching body in the scale trapping unit decreases as the scale attaching proceeds, the attaching body can be exchanged for a new one whenever necessary. Alternatively, the attaching body may be extracted, cleaned, and mounted in the scale trapping unit again.

### Embodiment 2

### Structure of Entire Device: cleaning of Attaching Body + Drainage

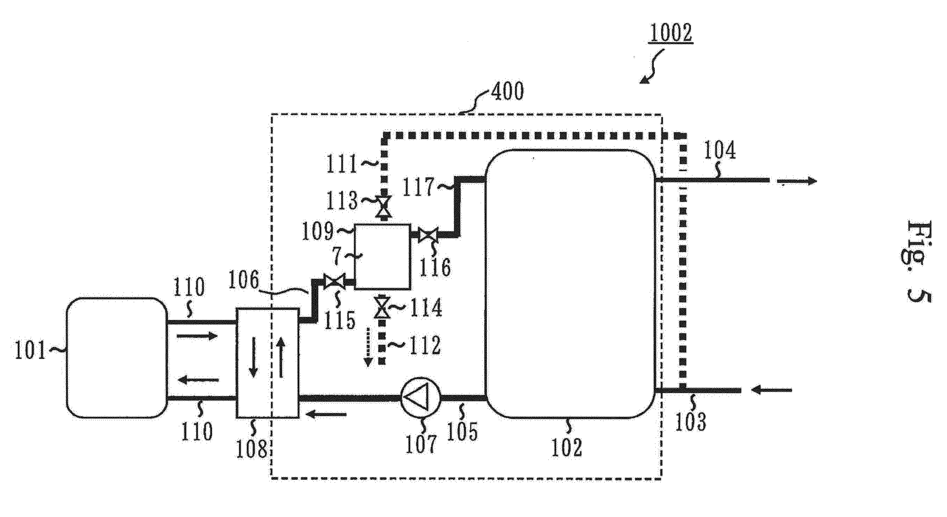

Fig. 5 is a schematic diagram of the heating device 1002 of Embodiment 2. A structure of the heating device 1002 will be described with reference to Fig. 5. In this heating device 1002, the tap water feed pipe 111, a scale discharge pipe 112, and the like are further connected to the scale trapping unit 109, as compared to the heating device 1001 of Embodiment 1. In the heating device 1002, the attaching body 7 can be cleaned, and scales peeled (peeling step) by cleaning can be discharged (discharge step).

As shown in Fig. 5, the tap water feed pipe 111 is connected to the upper portion of the scale trapping unit 109, and the scale discharge pipe 112 is connected to the lower portion of the scale trapping unit. One end of the tap water feed pipe 111 is connected to the tap water pipe 103, and one end of the scale discharge pipe 112 is connected to the drain of each house.
"House" is mentioned because the heating device 1002 may be disposed in each house. This applies to Embodiments 1, 3, and 4 as well. Flow channel opening/closing valves 113, 114, 115, and 116 are respectively provided to the tap water feed pipe 111, the scale discharge pipe 112, the scale trapping unit inlet pipe 106, and the scale trapping unit outlet pipe 117. Except for this, the heating device 1002 is the same as the heating device 1001 of Fig. 4.

The operating action of the heating device 1002 will be described with reference to Fig. 5. In the same manner as in Embodiment 1, a circulation pump 107 is actuated to feed water in the hot water tank 102 to the heat exchanger 108, in order to heat the water by heat exchange with a refrigerant. At this time, the water flowing from the heat exchanger 108 is returned to the hot water tank 102 through the scale trapping unit 109. During this step, the flow channel opening/closing valves 115 and 116 are open and the flow channel opening/closing valves 113 and 114 are closed.

Then, during a "period where heating is not carried out", the flow channel opening/closing valves 115 and 116 are closed and the flow channel opening/closing valves 113 and 114 are opened, to introduce tap water (an example of a fluid) from the tap water pipe 103 to the upper portion of the scale trapping unit through the tap water feed pipe 111.

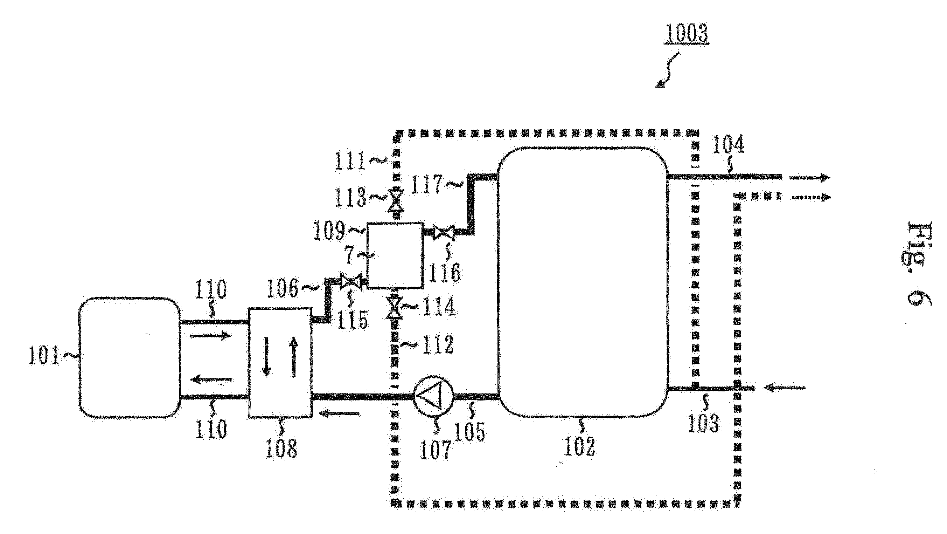

The tap water passing through the scale trapping unit is drained (drainage step) to the drain of each house through the scale discharge pipe 112. The valves may be opened or closed automatically by the control device, or by a manual operation periodically. The case of Fig. 6 indicating Embodiment 3 to be described later is based on an assumption that the valves are automatically opened or closed by the control device.

The period where heating is not carried out (non-heating period or non-heating step) signifies a period where a heating medium for heating and water to be heated (tap water to be heated) do not circulate to the heat exchanger 108. When the tap water in the hot water tank 102 reaches a predetermined temperature, the flow of the heating medium and tap water to the heat exchanger 108 is stopped in this manner.

If a scale trapping unit is provided to the subsequent stage of the heat exchanger 108 as in Embodiment 2 and water containing scale particles is brought into contact with the attaching body, the same effect as that of Embodiment 1 can be obtained.

### Effect of Cleaning and Drainage

Furthermore, as in Embodiment 2, during the period where heating is not carried out, if tap water is introduced into the scale trapping unit as cleaning water and the scales are peeled from the attaching body and discharged to the outside of the water circuit, the attaching body can be regenerated. Namely, the attaching function of the attaching body can be regenerated.

By regenerating the attaching function, scale trapping can be carried out without exchanging the attaching body for a long period of time. Thus, the heat transfer performance of the heat exchanger 108 can be maintained by a much simple operation.

### Water Circuit 400

A water circuit 400 will be described with reference to Fig. 5. The "water circuit 400" is a route of the hot water tank 102 → the heat exchanger 108 → the scale trapping unit 109 → the hot water tank 102 in Fig. 5.

More specifically, the → "water circuit 400" is a collective general term for pipes and mechanisms (including the flow channel opening/ closing valves 115 and 116) in the route of the hot water tank 102 → the heat exchanger inlet pipe 105 → the circulation pump 107 → the heat exchanger 108 → the scale trapping unit inlet pipe 106 → the scale trapping unit 109 → the scale trapping unit outlet pipe 117 → the hot water tank 102.

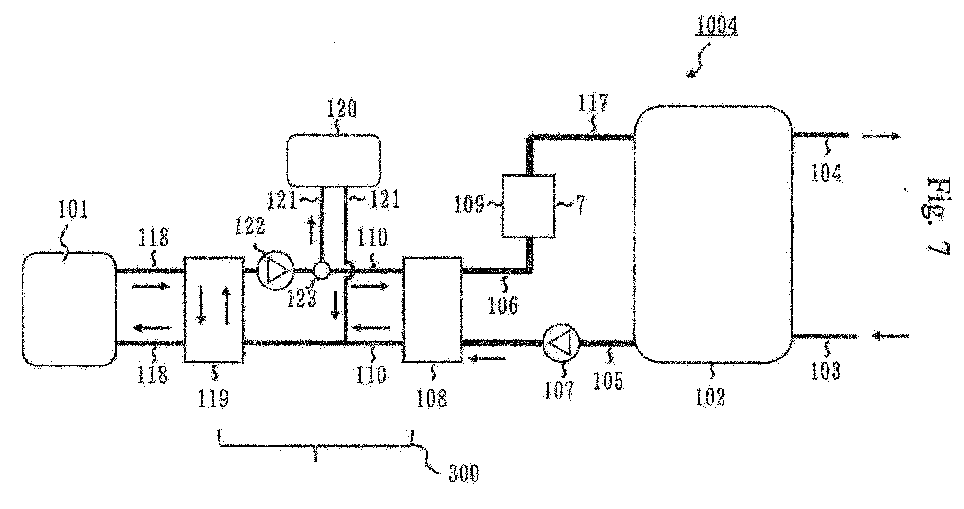

The water circuit 400 is formed in Embodiments 1, 3, and 4 in Figs. 4, 6, and 7 as well, although no flow channel opening/closing valves 115 and 116 are employed in Figs. 4 and 7.

### Embodiment 3

### Structure of Entire Device: Cleaning of Attaching Body + Use of Feed Water

Fig. 6 is a schematic diagram of the heating device 1003 of Embodiment 3. A structure of the heating device 1003 of Embodiment 3 will be described with reference to Fig. 6. The heating device 1003 of Embodiment 3 uses tap water of the scale discharge pipe 112, as compared to the heating device 1002 of Embodiment 2. As shown in Fig. 6, in the heating device 1003, the scale discharge pipe 112 provided to the lower portion of the scale trapping unit 109 is connected to the water feed line of each house. Except for this, the heating device 1003 is the same as the heating device 1002 of Fig. 5.

The operating action of the heating device 1003 will be described with reference to Fig. 6. In the same manner as in Embodiment 2, the circulation pump 107 is actuated to feed water in the hot water tank 102 to the heat exchanger 108, in order to heat the water by heat exchange with a refrigerant.

At this time, water coming from the heat exchanger 108 is returned to the hot water tank 102 through the scale trapping unit 109. During this step, the flow channel opening/closing valves 115 and 116 are open and the flow channel opening/closing valves 113 and 114 are closed.

Then, during a "period where heating is not carried out", if tap water is to be used in the toilet, bathroom, and the like, the flow channel opening/closing valves 115 and 116 are closed and the flow channel opening/ closing valves 113 and 114 are opened in an interlocked manner with the use of the tap water, in order to introduce tap water from the tap water pipe 103 to the upper portion of the scale trapping unit 109 through the tap water feed pipe 111. The tap water passing through the scale trapping unit is fed through the scale discharge pipe 112 and is used as feed water in the toilet, bathroom, and the like of each house.

If a scale trapping unit is provided to the subsequent stage of the heat exchanger 108 as in Embodiment 3 and water containing scale particles is brought into contact with the attaching body, the same effect as that of Embodiment 1 can be obtained.

As in Embodiment 3, during a period where heating is not carried out, if tap water is introduced into the scale trapping unit as cleaning water and the scales are peeled from the attaching body (peeling step) and discharged to the outside of the water circuit (discharge step), the same effect as that of Embodiment 2 can be obtained.

### Use of Waste Water

Tap water after cleaning can be used as tap water, although it contains scales. Hence, as in Embodiment 3, if cleaning is conducted in an interlocked manner with the use of tap water and the tap water after cleaning is used as feed water to each house, the heat transfer performance of the heat exchanger 108 can be maintained without increasing the amount of the tap water used for cleaning.

The meaning of "in an interlocked manner with the use of tap water" mentioned above is as follows. Tap water is fed using a detection device (means) such as a flow sensor or pressure sensor in a tap water line that can detect flow of water. A detection signal from the detection device is fetched by the control device. The control device outputs an opening/closing signal to the flow channel opening/closing valves 113 and 114.

In the heating device 1003 of Embodiment 3, the flow channel opening/closing valves 115 and 116 and the control device constitute a stopping part that stops heated water from passing in the scale trapping unit 109. The tap water feed pipe 111, the scale discharge pipe 112, the flow channel opening/ closing valves 113 and 114, and the control device constitute a peeling part that peels scales from the attaching body 7. The stopping part also functions as a discharge part that discharges the peeled scales.

### Embodiment 4

### Structure of Entire Device: 2-Stage Heating

Fig. 7 is a schematic diagram of the heating device 1004 of Embodiment 4. A structure of the heating device 1004 of Embodiment 4 will be described with reference to Fig. 7. In the heating device 1004 of Embodiment 4, the intermediate circuit 300 in which hot water circulates exists between the heat source 101 and the heat exchanger 108, as compared to the heating devices 1001 to 1003 of Embodiments I to 3.

In Embodiments 1 to 3, the refrigerant from the heat source is circulated to the primary side of the heat exchanger 108. However, circulation is not limited to this structure. Like in Europe, if water heated by a heat pump is used as a common heat source for room heating and water heating, the water heated by the heat pump may be circulated to the primary side of the heat exchanger 108 in the same manner. Fig. 7 shows this structure schematically.

The structure of the heating device 1004 will be initially described.

As shown in Fig. 7, the heat source 101 and the primary side of a plate heat exchanger (2) 119 are connected by a circulation pipe (2) 118, and the secondary side of the plate heat exchanger (2) 119 and the primary side of the heat exchanger 108 are connected by the circulation pipe 110. The circulation pipe 110 is provided with a circulation pump (2) 122.

Furthermore, a heating circulation pipe 121 branches from the circulation pipe. A selector valve 123 is provided to the branch point. The heating circulation pipe is connected to a heating system 120.

Except for this, the structure in Fig. 7 is the same as that in Fig. 4.

The operating action of the heating device 1004 will be described with reference to Fig. 7. Tap water is introduced from the tap water pipe 103 to the hot water tank 102. When the hot water tank 102 becomes full, the heat source 101 is actuated to circulate a high-temperature refrigerant through the circulation pipe (2) 118.

Then, the selector valve 123 is operated to close the heating circulation pipe 121. The circulation pump (2) 122 is actuated to circulate water through the heat exchanger (2) 119, the heat exchanger 108, and the circulation pipe 110 between the heat exchanger (2) 119 and the heat exchanger 108.

Simultaneously, the circulation pump 107 is actuated to feed water in the hot water tank 102 to the heat exchanger 108 through the heat exchanger inlet pipe 105, in order to heat the water by heat exchange with the circulating water in the circulation pipe. Water coming from the heat exchanger 108 is introduced to the scale trapping unit 109 through the scale trapping unit inlet pipe 106 to come into contact with the attaching body 7 in the scale trapping unit 109.

Water discharged from the scale trapping unit 109 is returned to the hot water tank 102 through the scale trapping unit outlet pipe 117. The water in the hot water tank 102 continues to circulate until reaching a predetermined temperature. After heating, when necessary, the water in the hot water tank 102 is used as hot water through the hot water pipe 104.

As in Embodiment 4, in a case where water heated by the heat pump is to be used as the common heat source for room heating and water heating as well, the scale trapping unit 109 is provided to the subsequent stage of the heat exchanger 108, and water containing scale particles is brought into contact with the attaching body. Thus, the scale particles in the water are caused to attach to the surface of the attaching body, so that the scale particles can be removed from the water.

Furthermore, if the water is passed through the attaching body while maintaining the attaching body at a high temperature, scale crystallization is promoted. Instead of mere "attaching", two functions of "attaching" and "crystallization" allow trapping the scale particles existing in the water with the attaching body, so that the scale particles can be removed from the water.

As a result, scale attaching to the heat exchanger 108 can be reduced more largely than with a conventional scale trapping unit where attaching or crystallization does not occur. The heat transfer performance of the heat exchanger 108 can thus be maintained.

When the trapping ability of the attaching body in the scale trapping unit decreases as the scale attaching proceeds, the attaching body can be exchanged for a new one if necessary. Alternatively, the attaching body may be extracted, cleaned, and mounted in the scale trapping unit again.

Fig. 7 does not show peeling scales from the attaching body 7 of the scale trapping unit 109 and discharging the scales from the water circuit. However, even in a case where water heated by the heat pump (an example of the heat source 101) is to be used as the common heat source for room heating and water heating, the scale trapping unit may be provided with a tap water feed pipe and a scale discharge pipe, as in Figs. 5 and 6, and the scales may be peeled from the attaching body and discharged to the outside of the water circuit.

### Embodiment 5

### Addition of Pulsation Step

Embodiment 5 will now be described. Embodiment 5 relates to pulsation. Embodiment 1 to 4 do not particularly show the state of the water current in the hot water tank 102, the heat exchanger 108, and the scale trapping unit 109, and the water circuit that includes these components. In Embodiments 1 to 4, the water may be fed at a constant flow rate as in a normal operation. Alternatively, pulsation may be conducted.

Namely, an operation may be repeated in which the flow rate is 20 L/min for 4 sec and 40 L/min for 1 sec, or is 20 L/min for 4 sec and 5 L/min for 1 sec, periodically. In this case, if scale trapping and pulsatory operation (pulsation step) are combined, they produce a multiplier effect, providing a much higher scale suppressing effect.

Pulsation is generated by controlling the circulation pump 107 with the control device. Pulsation suffices if it can be generated at least in the hot water passing through the heat exchanger 108. For example, pulsation may be generated on the outlet side (high-temperature side of the hot water), not on the inlet side, of the heat exchanger 108.

### Embodiment 6

### Structure of Scale Trapping_Unit: Particle-Type; No Cleaning

The following Embodiments 6 to 15 relate to a structure of the attaching body 7 and a structure of the scale trapping unit 109 that stores the attaching body 7. The following Embodiments 6 to 15 are employed in, for example, the heating devices 1001 to 1004 described in Embodiments 1 to 4. Embodiments 6 to 14 each show a particle-type or string-type attaching body 7.

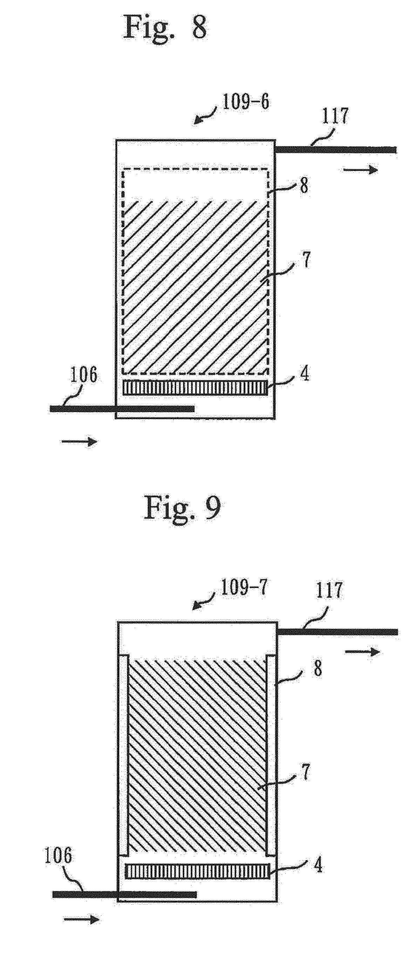

In the following drawings, diagonal lines rising to the upper right represent a particle-type attaching body 7, and diagonal lines lowering to the lower right represent a string-type attaching body. A scale trapping unit 109-6 of Embodiment 6 will be described with reference to Fig. 8. Embodiment 6 shows a case where a particle-type attaching body 7 is used. The diameter of each particle of the particle-type attaching body 7 is, for example, approximately 1 mm to 5 mm.

Fig. 8 is a schematic diagram of the scale trapping unit 109-6.

The structure of the scale trapping unit 109-6 of Embodiment 6 will be described. As shown in Fig. 8, the scale trapping unit inlet pipe 106 and the scale trapping unit outlet pipe 117 are connected to the scale trapping unit 109-6. Although not shown, the other ends of the scale trapping unit inlet pipe 106 and scale trapping unit outlet pipe 117 are respectively connected to the heat exchanger 108 and the hot water tank 102, as in the heating device 1001 of Fig. 4.

A rectifier 4 and an attaching body holding container 8 are mounted in the scale trapping unit 109-6, and particle-type silicone rubber as the attaching body 7 fills the attaching body holding container 8. The attaching body holding container 8 is formed of metal-made mesh or the like. Thus, while the attaching body holding container 8 holds the attaching body 7, water and scale particles can pass through the attaching body holding container 8 freely. The attaching body holding container 8 is detachable from the scale trapping unit 109-6.

The operating action of the heating device 1001 that takes place when the scale trapping unit 109-6 of Embodiment 6 is employed in the heating device 1001 will be described with reference to Fig. 8.

In the heating step, high-temperature water heated by the heat exchanger 108 is introduced to the lower portion of the scale trapping unit through the scale trapping unit inlet pipe 106, and is caused to pass through the scale trapping unit via the rectifier 4 while being in contact with the attaching body in the attaching body holding container. The water having passed is introduced to the hot water tank 102 through the scale trapping unit outlet pipe 117.

When the trapping ability of the attaching body 7 decreases as the scale attaching proceeds, during a period where heating is not carried out, the attaching body holding container is extracted from the scale trapping unit 109-6, and an attaching body holding container filled with a new attaching body is mounted. Alternatively, the attaching body may be extracted, cleaned, and mounted in the scale trapping unit again.

As in Embodiment 6, if heated water is brought into uniform contact with the particle-type attaching body using the rectifier, scale attaching and scale crystal growth can be conducted more stably. When the attaching body is exchanged together with the attaching body holding container 8, the scale trapping ability can be restored quickly and easily.

Although the rectifier 4 is employed in Fig. 8, not only the rectifier 4 but also any other device can be used as far as it can bring the heated water into uniform contact with the attaching body. If the flow of water can be made uniform by means of, for example, a structure in the lower portion of the scale trapping unit 109, the rectifier device can be omitted.

### Embodiment 7

### Structure of Trapping Unit: String-Type; No Cleaning

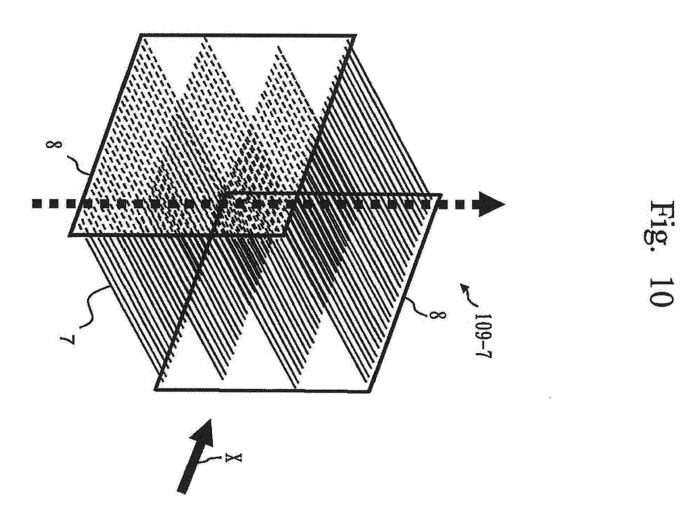

A scale trapping unit 109-7 of Embodiment 7 will be described with reference to Figs. 9 and 10.

Fig. 9 shows a structure of the scale trapping unit 109-7. Embodiment 7 is different from Embodiment 6 in that it employs a string-type attaching body 7. The string-type attaching body 7 has a diameter of, for example, 0.2 mm to 1.0 mm. Except for this, Embodiment 7 is the same as Embodiment 6. In the scale trapping unit 109-7 of Embodiment 7, cleaning does not take place (to match the heating device 1001), in the same manner as in the scale trapping unit 109-6 of Embodiment 6.

The structure of the scale trapping unit 109-7 of Embodiment 7 will be described. As shown in Fig. 9, the rectifier 4 and the attaching body holding container 8 are mounted in the scale trapping unit 109-7, and string-type silicone rubber fills the attaching body holding container to bridge the gap between the right and left wall surfaces of the attaching body holding container.
Fig. 10 is a schematic, transparent perspective view of the scale trapping unit 109-7. For the illustrative convenience, the attaching body holding container 8 is expressed using two planes. The broken-line arrow direction represents the flowing direction of the hot water. Fig. 9 corresponds to Fig. 10 as seen from the direction of an arrow X.

In Fig. 10, for the purpose of easy recognition, attaching bodies 7 are disposed to be spaced apart from each other in the broken-line arrow direction along which the heated water flows. In practice, the attaching bodies 7 are disposed densely in the broken-line arrow direction.

As shown in Fig. 10, in the scale trapping unit 109-7, the roots of the strings (attaching bodies 7) are attached to the wall of the attaching body holding container 8 as dense as possible within a range not serving as a resistance against the water current.

This provides an impression that very many thin string-type attaching bodies 7 exist to bridge the gap between the right and left walls of the attaching body holding container 8. Figs. 9 and 10 are merely examples, of course, and the structure of the scale trapping unit is not limited to this. The upper and lower portions of the attaching body holding container 8 are open.

Thus, while the attaching body holding container 8 holds the attaching bodies 7, water and scale particles can pass through the attaching body holding container 8 freely. Also, the attaching body holding container 8 is detachable from the scale trapping unit. Except for this, the structure in Fig. 9 is the same as that in Fig. 8.

The operating action of the scale trapping unit 109-7 in the heating device 1001 is the same as that of the scale trapping unit 109-6. An explanation will be made with reference to Fig. 9. In the heating step, high-temperature water heated by the heat exchanger 108 is introduced to the lower portion of the scale trapping unit through the scale trapping unit inlet pipe 106, and is caused to pass through the scale trapping unit via a rectifier while being in contact with the attaching bodies in the attaching body holding container. The water having passed is introduced to the hot water tank 102 through the scale trapping unit outlet pipe 117.

When the trapping ability of the attaching bodies decreases as the scale attaching proceeds, during a period where heating is not carried out, the attaching body holding container is extracted from the scale trapping unit 109-7, and the attaching body holding container 8 filled with new attaching bodies is mounted. Alternatively, the attaching bodies may be extracted, cleaned, and mounted in the scale trapping unit again.

As in Embodiment 7, when heated water is brought into uniform contact with the "string-type attaching bodies" using the rectifier, scale attaching and scale crystal growth can be conducted more stably. When the attaching bodies are exchanged together with the attaching body holding container, the scale trapping ability can be restored quickly and easily.

Although the rectifier is employed in Fig. 9, not only the rectifier 4 but also any other device can be used as far as it can bring the heated water into uniform contact with the attaching bodies. If the flow of water can be made uniform by means of, for example, a structure in the lower portion of the scale trapping unit 109-7, the rectifier device can be omitted.

### Embodiment 8

### Structure of Trapping Unit: Particle-Type; Scale Peeling by Collision of Attaching bodies (Means: Flow of Tap Water)

Scale trapping units 109-81 to 109-83 of Embodiment 8 will be described with reference to Figs. 11 to 14. In the scale trapping units 109-81 to 109-83, tap water is introduced to the structure of Embodiment 6.
Fig. 11 shows a structure of the scale trapping unit 109-81.

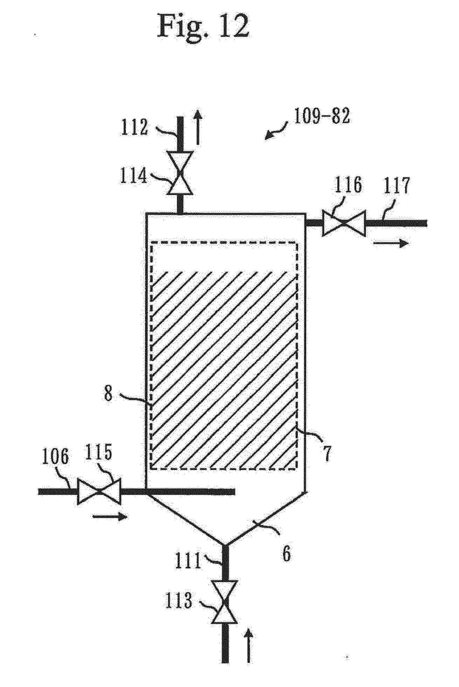

Fig. 12 shows a structure of the scale trapping unit 109-82.

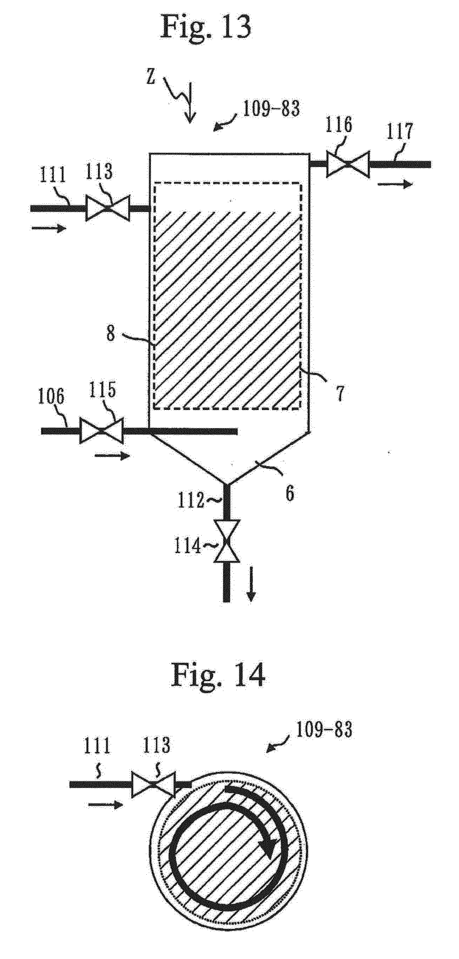

Fig. 13 shows a structure of the scale trapping unit 109-83.
Fig. 14 is an illustration (plan view) obtained when the scale trapping unit 109-83 of Fig. 13 is seen from the direction of an arrow Z. In Embodiment 8, tap water is introduced to the scale trapping unit, and scales are peeled and discharged. Namely, the heating device 1002 of Fig. 5 (or the heating device 1003 of Fig. 6) matches the scale trapping units of Figs. 11 to 14.

The structure of the scale trapping unit 109-81 will be described. As shown in Fig. 11, the scale trapping unit inlet pipe 106, the scale trapping unit outlet pipe 117, the tap water feed pipe 111, and the scale discharge pipe 112 are connected to the scale trapping unit 109-81. The tap water feed pipe 111, the scale discharge pipe 112, the scale trapping unit inlet pipe 106, and the scale trapping unit outlet pipe 117 are respectively provided with flow channel opening/closing valves 113, 114, 115, and 116.

Although not shown, the other ends of the scale trapping unit inlet pipe 106, scale trapping unit outlet pipe 117, tap water feed pipe 111, and scale discharge pipe 112 are respectively connected to the heat exchanger 108, the hot water tank 102, a tap water pipe, and the drain or feed line of each house, as in Figs. 5 and 6. The attaching body holding container 8 is mounted in the scale trapping unit 109, and "particle-type silicone rubber" as attaching bodies 7 fills the attaching body holding container 8. The attaching body holding container 8 is formed of metal-made mesh or the like.

Thus, while the attaching body holding container 8 holds the attaching bodies 7, water and scale particles can pass through the attaching body holding container 8 freely. In the scale trapping unit 109, a scale reservoir 6 is formed at a portion lower than the position where the scale trapping unit inlet pipe 106 is connected. The scale discharge pipe 112 is connected to the scale reservoir 6.

The operating action of the heating device 1002 (or the heating device 1003) will be described with reference to Fig. 11. In the heating step, the flow channel opening/closing valves 115 and 116 are opened, and the flow channel opening/closing valves 113 and 114 are closed. The high-temperature water heated by the heat exchanger 108 is introduced to the scale trapping unit through the scale trapping unit inlet pipe 106, and is caused to pass through the scale trapping unit while being in contact with the attaching bodies in the attaching body holding container. The water having passed is introduced to the hot water tank 102 through the scale trapping unit outlet pipe 117.

When the trapping ability of the attaching bodies decreases as the scale attaching proceeds, during a period where heating is not carried out, the flow channel opening/closing valves 115 and 116 are closed, and the flow channel opening/closing valves 113 and 114 are opened.

Tap water is introduced from the tap water feed pipe 111 and is brought into contact with the attaching bodies, thereby peeling the scales from the attaching bodies (peeling step). At the same time, the peeled scales are discharged (discharged step) through the scale discharge pipe 112.

As in Embodiment 8, when the flow of the tap water is used, the tap water comes into contact with the surfaces of the attaching bodies. As the attaching bodies sway, they collide against the attaching body holding container and against each other. Then, the scales attaching to the attaching bodies can be peeled from the attaching bodies. When the peeled scales are discharged by the tap water, the scale trapping ability can be restored.

### Type of Peeling

With the scale trapping unit 109-81 in Fig. 11, in order to peel the scales from the attaching bodies, tap water is fed to the scale trapping unit 109-81 via its upper portion, and drained from the lower portion of the scale trapping unit together with the peeled scales. However, peeling is not limited to this.

Any other peeling method can be employed as far as it can bring the tap water into contact with the surfaces of the attaching bodies and can sway the attaching bodies to collide against the attaching body holding container and against each other, thus peeling the scales attaching to the attaching body holding container as well as the scales attaching to the attaching bodies.

As in the scale trapping unit 109-82 shown in Fig. 12, tap water may be introduced to the scale trapping unit 109-81 via its lower portion and discharged via its upper portion. In the scale trapping unit 109-83 shown in Figs. 13 and 14, tap water is introduced in the direction of tangent via the side portion to cause a swirling flow, and is discharged via the lower portion. The scale trapping unit 109-83 having this structure may also be employed.

### Embodiment 9

### Structure of Trapping Unit: String-Type; Scale Peeling by Contact with Attaching Body (Means: Flow of Tap Water)

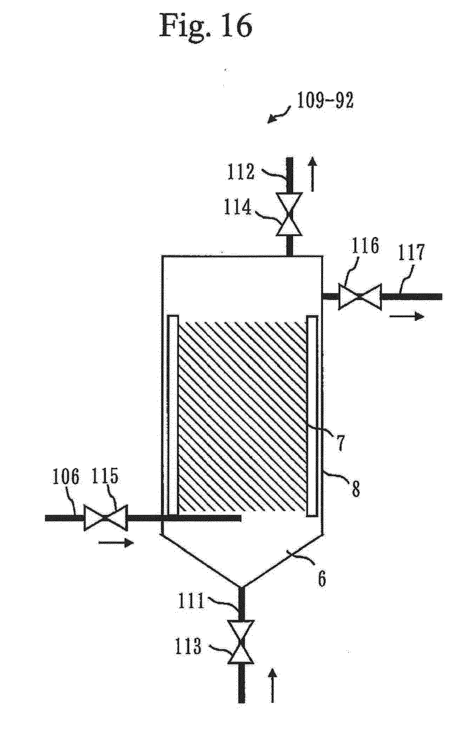

A scale trapping unit 109-91 and a scale trapping unit 109-92 of Embodiment 9 will be described with reference to Figs. 15 and 16.
Fig. 15 shows a structure of the scale trapping unit 109-91.
Fig. 16 shows a structure of the scale trapping unit 109-92. The scale trapping units 109-91 and 109-92 of Embodiment 9 respectively correspond to the scale trapping units 109-81 and 109-82 of Embodiment 8. While Embodiment 8 employs the particle-type attaching bodies 7, Embodiment 9 employs string-type attaching bodies 7. Hence, both the scale trapping units 109-91 and 109-92 match the heating device 1002 of Fig. 5 (or the heating device 1003 of Fig. 6).

The scale trapping unit 109-91 will be described with reference to Fig. 15. The attaching body holding container 8 is mounted in the scale trapping unit 109-91, as shown in Fig. 10, and "string-type silicone rubber" fills the attaching body holding container 8 to bridge the gap between the right and left wall surfaces of the attaching body holding container.

The upper and lower portions of the attaching body holding container 8 are open. Thus, while the attaching body holding container 8 holds the attaching bodies, water and scale particles can pass through the attaching body holding container 8 freely. Except for this, the scale trapping unit 109-91 is the same as the scale trapping unit 109-81 in Fig. 11.

The operating action of the heating device 1002 will be described with reference to Fig. 15. The action of the following heating device 1002 is the same as that of Embodiment 8. In the heating step, the flow channel opening/closing valves 115 and 116 are opened, and the flow channel opening/ closing valves 113 and 114 are closed.

The high-temperature water heated by the heat exchanger 108 is introduced to the scale trapping unit through a scale trapping unit inlet pipe 106, and is caused to pass through the scale trapping unit while being in contact with the attaching bodies in the attaching body holding container. The water having passed is introduced to the hot water tank 102 through the scale trapping unit outlet pipe 117.

When the trapping ability of the attaching bodies decreases as the scale attaching proceeds, during a period where heating is not carried out, the flow channel opening/closing valves 115 and 116 are closed, and the flow channel opening/closing valves 113 and 114 are opened. Tap water is introduced from the tap water feed pipe 111 and is brought into contact with the attaching bodies, thereby peeling the scales from the attaching bodies. At the same time, the peeled scales are discharged through the scale discharge pipe 112.

As in Embodiment 9, when the flow of tap water is used, the tap water comes into contact with the surfaces of the attaching bodies. As the attaching bodies stretch/contract, they collide against the attaching body holding container and against each other. Then, the scales attaching to the attaching bodies can be peeled from the attaching bodies. When the peeled scales are discharged by the tap water, the scale trapping ability can be restored.

With the scale trapping unit 109-91 in Fig. 15, in order to peel the scales from the attaching bodies, tap water is fed to the scale trapping unit via its upper portion, and drained from its lower portion together with the peeled scales. However, peeling is not limited to this.

Any other peeling method can be employed as far as it can bring the tap water into contact with the surfaces of the attaching bodies and can stretch the attaching bodies to collide against the attaching body holding container and against each other, thus peeling the scales attaching to the attaching body holding container as well as the scales attaching to the attaching bodies. Fig. 16 shows the scale trapping unit 109-92. As in the scale trapping unit 109-92 of Fig. 16, tap water may be introduced to the scale trapping unit via its lower portion and discharged via its upper portion.

### Embodiment 10

### Structure of Trapping Unit: Particle-Type; Scale Peeling by Collision of Attaching Body (Means: Rotation by Motor)

Fig. 17 shows the scale trapping unit 109-10 of Embodiment 10. The scale trapping unit 109-10 of Embodiment 10 will be described with reference to Fig. 17. The scale trapping unit 109-10 is obtained by providing the peeling mechanism 210 to the scale trapping unit 109-81 of Embodiment 8.

A structure of the scale trapping unit 109-10 will be described with reference to Fig. 17. In the same manner as in Embodiment 8, the scale trapping unit inlet pipe 106, the scale trapping unit outlet pipe 117, the tap water feed pipe 111, and the scale discharge pipe 112 are connected to the scale trapping unit 109-10. The tap water feed pipe 111, the scale discharge pipe 112, the scale trapping unit inlet pipe 106, and the scale trapping unit outlet pipe 117 are respectively provided with the flow channel opening/closing valves 113, 114, 115, and 116.

Although not shown, the other ends of the scale trapping unit inlet pipe 106, scale trapping unit outlet pipe 117, tap water feed pipe 111, and scale discharge pipe 112 are respectively connected to the heat exchanger 108, the hot water tank 102, the tap water pipe, and the drain or feed line of each house, as in Figs. 5 and 6.

The attaching body holding container 8 is mounted in the scale trapping unit 109-10, and particle-type silicone rubber as attaching bodies 7 fills the attaching body holding container 8. The attaching body holding container 8 is formed of metal-made mesh or the like. Thus, while the attaching body holding container 8 holds the attaching bodies, water and scale particles can pass through attaching body holding container 8 freely.

### Peeling Mechanism 210

The scale trapping unit 109-10 is provided with the peeling mechanism 210 that peels scales from the attaching bodies 7. The peeling mechanism 210 includes a rotation shaft 9, a rotary blade 10, and a rotary motor 11. The rotation shaft 9 provided with the rotary blade 10 is held in the attaching body holding container 8, and the rotation shaft 9 is connected to the rotary motor 11 provided outside the upper portion of the scale trapping body. In the scale trapping unit 109-10, the scale reservoir 6 is formed at a portion lower than the position where the scale trapping unit inlet pipe 106 is connected. The scale discharge pipe 112 is connected to the scale reservoir 6.

The operating action of the heating device 1002 will be described with reference to Fig. 17. In the heating step, in the same manner as in Embodiment 8, the flow channel opening/closing valves 115 and 116 are opened, and the flow channel opening/closing valves 113 and 114 are closed. The high-temperature water heated by the heat exchanger 108 is introduced to the scale trapping unit through the scale trapping unit inlet pipe 106, and is caused to pass through the scale trapping unit while being in contact with the attaching bodies in the attaching body holding container. The water having passed is introduced to the hot water tank 102 through the scale trapping unit outlet pipe 117.

When the trapping ability of the attaching bodies decreases as the scale attaching proceeds, during a period where heating is not carried out, the flow channel opening/closing valves 115 and 116 are closed. The rotary motor 11 is actuated to rotate the rotary blade 10. Due to the rotation, the attaching bodies sway. Then, the attaching bodies collide against the rotary blade and the wall surface of the attaching body holding container, as well as against each other.

Impact of such collision peels the scales attaching to the attaching bodies. After rotating the rotary blade 10 for a predetermined period of time, the rotation is stopped and the water is set still. This allows the scales peeling from the attaching bodies to sediment (rest) in the scale reservoir 6 (reserving step). After that, the flow channel opening/closing valves 113 and 114 are opened. Tap water is introduced from the tap water feed pipe 111 to discharge the reserved scales from the scale discharge pipe 112.

As in Embodiment 10, when the rotary blade 10 is used, it comes into contact with the surfaces of the attaching bodies. Also, as the attaching bodies sway, they collide against the attaching body holding container and against each other (application of impact). Thus, the scales attaching to the attaching bodies can be peeled from the attaching bodies. When the peeled scales are discharged by the tap water, the scale trapping ability can be restored.

In Fig. 17, the rotary blade is employed in the attaching body holding container for the purpose of peeling the scales from the attaching bodies. However, peeling is not limited to this. Any other peeling method can be employed as far as it can sway the attaching bodies so as to collide against the attaching body holding container and against each other, thereby peeling the scales attaching to the attaching body holding container or the attaching bodies.

The same effect can be obtained by, for example, placing a structure in the attaching body holding container and moving the structure vertically, by rotating the attaching body holding container in the scale trapping unit, or by vertically moving the attaching body holding container in the scale trapping unit.

### Embodiment 11

### Structure of Trapping Unit: String-Type; Scale Peeling by Contact with Attaching Body (Means: Horizontal Movement Caused by Motor)

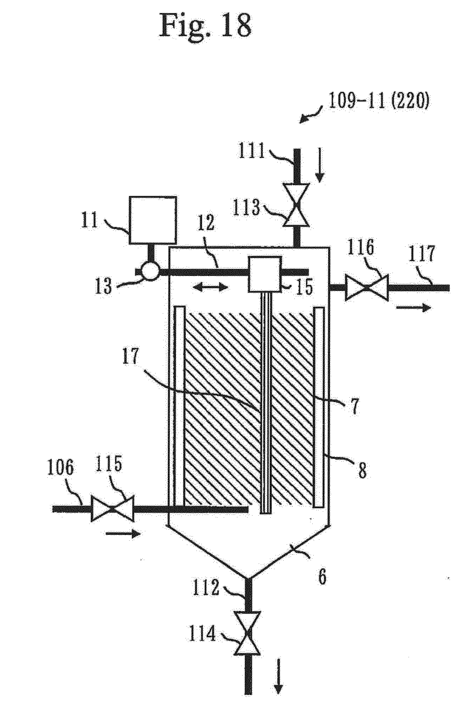

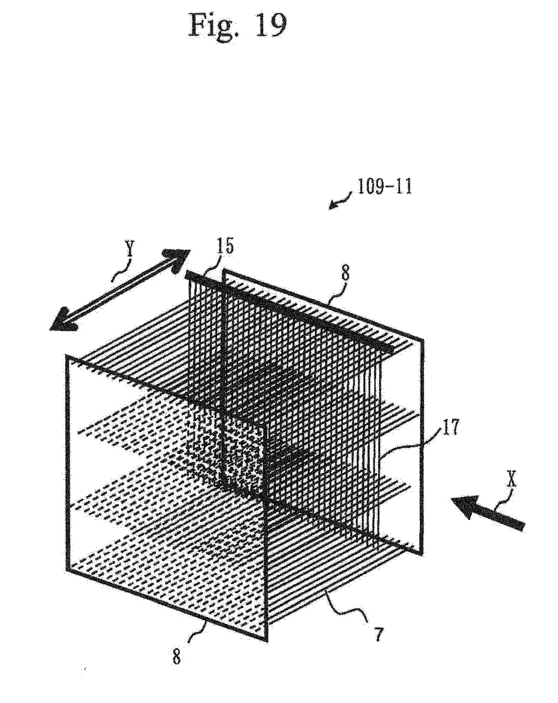

A scale trapping unit 109-11 of Embodiment 11 will be described with reference to Figs. 18 and 19. The scale trapping unit 109-11 (string-type) corresponds to the scale trapping unit 109-10 (particle-type).
Fig. 18 shows a structure of the scale trapping unit 109-11. The scale trapping unit 109-11 is obtained by providing the peeling mechanism 220 to the scale trapping unit 109-91 of Embodiment 9.
Fig. 19 is a schematic transparent perspective view of the scale trapping unit 109-11 and corresponds to a state of Fig. 10 with the peeling mechanism 220 added. Of the peeling mechanism 220, a movable body 15 and a contact body 17 are shown for the descriptive convenience.

The structure of the scale trapping unit 109-11 will be described. The attaching body holding container 8 is mounted in the scale trapping unit 109-11, as shown in Fig. 18, and string-type silicone rubber fills the attaching body holding container 8 to bridge the gap between the right and left wall surfaces of the attaching body holding container 8, as described with reference to Fig. 10. The upper and lower portions of the attaching body holding container 8 are open. Thus, while the attaching body holding container 8 holds the attaching bodies, water and scale particles can pass through the attaching body holding container 8 freely.

### Peeling_Mechanism 220

The scale trapping unit 109-11 is provided with the peeling mechanism 220. The peeling mechanism 220 includes the rotary motor 11, a movable shaft 12, a rotary/linear converter 13, and the movable body 15. As shown in Fig. 19, the movable body 15 is reciprocally moved in the long-side direction (Y direction in Fig. 19) of attaching bodies 7, and the contact body 17 is moved while being in contact with the attaching bodies 7, thereby scrubbing off the scales attaching to the surfaces of the attaching bodies. The specific operation is as follows.

As shown in Fig. 18, the movable shaft 12 is set in the upper portion of the attaching body holding container 8 where the movable body 15 for moving the movable shaft 12 in the horizontal direction and the rotary motor 11 and rotary/linear converter 13 for moving the movable body 15 are provided. As the contact body 17, a large number of thin, elongated metal wires or the like are provided like a brush to the movable body 15 and are in contact with the attaching bodies 7. Except for this, the structure in Fig. 18 is the same as that in Fig. 15.

The operating action of the heating device 1002 will be described with reference to Fig. 18. In the heating step, the flow channel opening/closing valves 115 and 116 are opened, and the flow channel opening/ closing valves 113 and 114 are closed. The high-temperature water heated by the heat exchanger 108 is introduced to the scale trapping unit through a scale trapping unit inlet pipe 106, and is caused to pass through the scale trapping unit while being in contact with the attaching bodies in the attaching body holding container. The water having passed is introduced to the hot water tank 102 through the scale trapping unit outlet pipe 117.

When the trapping ability of the attaching bodies decreases as the scale attaching proceeds, during a period where heating is not carried out, the flow channel opening/closing valves 115 and 116 are closed. The rotary motor 11 is actuated to move the movable body 15 in the horizontal direction. Together with the movable body 15, the contact body 17 is moved while being in contact with the attaching bodies, thereby peeling the scales attaching to the attaching bodies.

After the horizontal movement is repeated for a predetermined period of time, the movement is stopped and the water is set still. This allows the scales peeling from the attaching bodies to sediment in the scale reservoir 6. After that, the flow channel opening/closing valves 113 and 114 are opened. Tap water is introduced from a tap water feed pipe to discharge the reserved scales from a scale discharge pipe.

As in Embodiment 11, when the movable body 15 and the contact body 17 are used, the contact body comes into contact with the surfaces of the attaching bodies. Also, as the attaching bodies sway, they collide against each other. Thus, the scales attaching to the attaching bodies can be peeled from the attaching bodies. When the peeled scales are discharged by the tap water, the scale trapping ability can be restored.

### Embodiment 12

### Structure of Trapping Unit: String-Type; Scale Peeling by Stretchability of Attaching Body (Means: Vertical Movement Caused by Motor)

Fig. 20 shows a structure of a scale trapping unit 109-12. The structure of the scale trapping unit 109-12 of Embodiment 12 will be described with reference to Fig. 20. The structure of the scale trapping unit 109-12 is similar to that of the scale trapping unit 109-11. The scale trapping unit 109-12 is different from the scale trapping unit 109-11 in the peeling mechanism. In the peeling mechanism 220 of the scale trapping unit 109-11, the contact body moves in the horizontal direction. In the scale trapping unit 109-12, the contact body moves in the vertical direction.

The structure of the scale trapping unit 109-12 will be described. The attaching body holding container 8 is mounted in the scale trapping unit 109-12, as shown in Fig. 20, and string-type silicone rubber fills the attaching body holding container 8 to bridge the gap between the right and left wall surfaces of the attaching body holding container. The upper and lower portions of the attaching body holding container 8 are open. Thus, while the attaching body holding container 8 holds the attaching bodies 7, water and scale particles can pass through the attaching body holding container 8 freely.

### Peeling Mechanism 230

The scale trapping unit 109-12 is provided with the peeling mechanism 230. The peeling mechanism 230 includes the rotary motor 11, the movable shaft 12, the rotary/linear converter 13, and the contact body 17. The movable shaft 12 is set in the attaching body holding container 8 provided with the rotary motor 11 and the rotary/linear converter 13 that serve to move the contact body 17 and movable shaft 12. The contact body 17 is formed of metal-made mesh or the like. Water and scale particles can pass through the contact body 17 freely. Except for this, the structure in Fig. 20 is the same as that in Fig. 18.

The operating action of the heating device 1002 will be described with reference to Fig. 20. In the heating step, the flow channel opening/closing valves 115 and 116 are opened, and the flow channel opening/ closing valves 113 and 114 are closed. The high-temperature water heated by the heat exchanger 108 is introduced to the scale trapping unit 109-12 through a scale trapping unit inlet pipe 106, and is caused to pass through the scale trapping unit 8 while being in contact with attaching bodies 7 in the attaching body holding container 8. The water having passed is introduced to the hot water tank 102 through the scale trapping unit outlet pipe 117.

When the trapping ability of the attaching bodies 7 decreases as the scale attaching proceeds, during a period where heating is not carried out, the flow channel opening/closing valves 115 and 116 are closed. The rotary motor 11 is actuated to move the contact body 17 in the vertical direction. As the contact body 17 moves in the vertical direction, the attaching bodies 7 are stretched (elastically deformed), thereby peeling the scales attaching to the attaching bodies 7.

Stretching takes place in the following manner. As has been described with reference to Fig. 10, the attaching bodies 7 exist to bridge the gap between the right and left walls of the attaching body holding container 8, and stretch (elastically deform) like elastic strings. When the contact body 17 is disposed in the attaching bodies 7 and is moved upward at a certain timing, the attaching bodies 7 located on the upper side of the contact body 17 move while stretching upward (with its two ends being fixed).

Then, when the contact body 17 is moved downward to the initial position, the attaching bodies 7 are restored to the initial length while contracting. In this manner, when the contact body 17 is moved vertically, the attaching bodies 7 attaching to the contact body 17 stretch. The scales attaching to the surfaces of the attaching bodies peel off the surfaces of the attaching bodies 7 as the attaching bodies 7 stretch.

After the vertical movement has been repeated for a predetermined period of time, the movement is stopped and the water is set still. This allows the scales peeling from the attaching bodies 7 to sediment in the scale reservoir 6. After that, the flow channel opening/closing valves 113 and 114 are opened. Tap water is introduced from a tap water feed pipe to discharge the reserved scales from a scale discharge pipe.

As in Embodiment 12, when the contact body 17 is used, it comes into contact with the surfaces of the attaching bodies. Also, as the attaching bodies 7 stretch, they collide against the attaching body holding container 8, and against each other. Thus, the scales attaching to the attaching bodies can be peeled from the attaching bodies. When the peeled scales are discharged by the tap water, the scale trapping ability can be restored.

### Embodiment 13

### Structure of Trapping Unit: Particle-Type; Scale Peeling by Collision of Attaching Body (Means: Rotation by Water Flow)

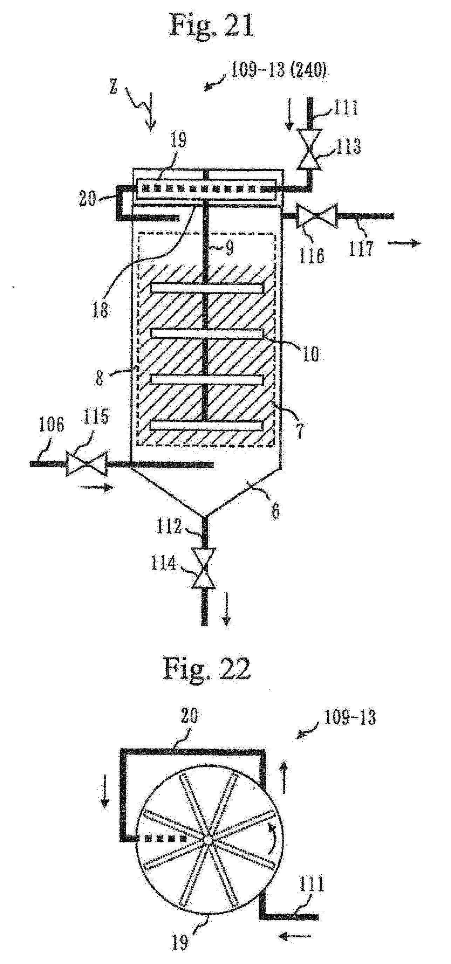

A scale trapping unit 109-13 of Embodiment 13 will be described with reference to Figs. 21 and 22.
Fig. 21 shows a structure of the scale trapping unit 109-13.
Fig. 22 (plan view) corresponds to Fig. 21 as seen from the direction of an arrow Z. The structure of the scale trapping unit 109-13 is similar to that of the scale trapping unit 109-10 of Embodiment 10. As compared to the scale trapping unit 109-10, the scale trapping unit 109-13 uses tap water as the power.

The structure of the scale trapping unit 109-13 will be described. The 109-13 is provided with the peeling mechanism 240. The peeling mechanism 240 includes the rotation shaft 9, the rotary blade 10, a partition 18, a rotator 19, and the like. As shown in Fig. 21, the partition 18 is set at an upper portion in the scale trapping unit 109. The rotator 19 connected to the rotation shaft 9 is set in a space above the partition 18. Furthermore, the tap water feed pipe 111 and a tap water inlet pipe 20 are connected to the space above the partition 18. Except for this, the structure in Fig. 21 is the same as that in Fig. 17.

The operating action of the heating device 1002 will be described with reference to Fig. 21. In the heating step, the flow channel opening/closing valves 115 and 116 are opened, and the flow channel opening/ closing valves 113 and 114 are closed. The high-temperature water heated by the heat exchanger 108 is introduced to the scale trapping unit through a scale trapping unit inlet pipe 106, and is caused to pass through the scale trapping unit while being in contact with the attaching bodies in an attaching body holding container. The water having passed is introduced to the hot water tank 102 through the scale trapping unit outlet pipe 117.

When the trapping ability of the attaching bodies 7 decreases as the scale attaching proceeds, during a period where heating is not carried out, the flow channel opening/closing valves 115 and 116 are closed and the flow channel opening/closing valves 113 and 114 are opened. Tap water is introduced from the tap water feed pipe 111.

The flow of the tap water rotates the rotator 19 above the partition 18. This rotation rotates the rotation shaft 9 and the rotary blade 10, and sways the attaching bodies 7. Then, the rotary blade 10 collides against the wall surface of the attaching body holding container 8, and the attaching bodies collide against each other to peel the scales attaching to the attaching bodies 7.

The tap water fed from the tap water feed pipe 111 is introduced to the space below the partition 18 of the scale trapping unit 109 through the tap water inlet pipe 20. While the tap water rotates the rotary blade 10 to peel the scales as described above, the peeled scales are discharged from the scale discharge pipe 112 through the scale reservoir 6.

As in Embodiment 13, when water flow and the rotary blade 10 are used, the rotary blade 10 comes into contact with the surfaces of the attaching bodies. Also, as the attaching bodies 7 sway, they collide against the attaching body holding container 8 and against each other. Thus, the scales attaching to the attaching bodies 7 can be peeled from the attaching bodies 7. When the peeled scales are discharged by the tap water, the scale trapping ability can be restored with a simple device and at a low cost without requiring power for peeling.

In Fig. 21, the rotary blade 10 is employed in the attaching body holding container 8 for the purpose of peeling the scales from the attaching bodies 7. However, peeling is not limited to this. Any other peeling method can be employed as far as it can sway the attaching bodies 7 so as to collide against the attaching body holding container 8 and against each other, thereby peeling the scales attaching to the attaching body holding container 8 or the attaching bodies 7.

The same effect can be obtained by, for example, placing a structure in the attaching body holding container 8 and moving the structure vertically, by rotating the attaching body holding container 8 in the scale trapping unit, or by vertically moving the attaching body holding container 8 in the scale trapping unit.

Also, in Fig. 21, the partition 18 is employed, and the rotator 19 is rotated above the rotator 19. However, the structure is not limited to this. Any other structure can be employed as far as it can rotate the rotary blade 10 or vertically move the structure by the function of the water flow.

### Embodiment 14

### Structure of Trapping Unit: String-Type; Scale Peeling by Stretch of Attaching Body (Means: Vertical Movement by Water Flow)

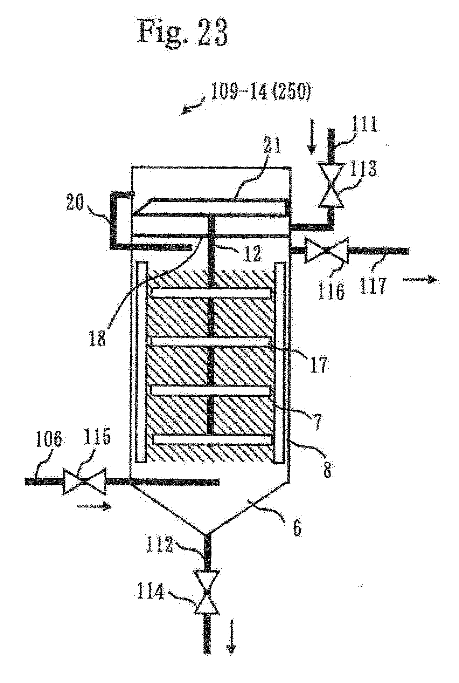

Fig. 23 shows a structure of a scale trapping unit 109-14. The scale trapping unit 109-14 of Embodiment 14 will be described with reference to Fig. 23. The structure of the scale trapping unit 109-14 is similar to that of the scale trapping unit 109-12 of Embodiment 12. As compared to the scale trapping unit 109-12, the scale trapping unit 109-14 uses tap water as the power.

The structure of the scale trapping unit 109-14 will be described. The 109-14 is provided with the peeling mechanism 250. The peeling mechanism 250 includes the movable shaft 12, the contact body 17, the partition 18, a movable body 21, and the like. As shown in Fig. 23, the partition 18 is set at an upper portion in the scale trapping unit 109-14. The movable body 21 connected to the movable shaft 12 is set in a space above the partition 18. Furthermore, the tap water feed pipe 111 and the tap water inlet pipe 20 are connected to the space above the partition 18. Except for this, the structure in Fig. 23 is the same as that in Fig. 20.

The operating action of the heating device 1002 will be described with reference to Fig. 23. In the heating step, the flow channel opening/closing valves 115 and 116 are opened, and the flow channel opening/ closing valves 113 and 114 are closed. The high-temperature water heated by the heat exchanger 108 is introduced to the scale trapping unit 109-14 through a scale trapping unit inlet pipe 106, and is caused to pass through the scale trapping unit 109-14 while being in contact with attaching bodies 7 in the attaching body holding container 8. The water having passed is introduced to the hot water tank 102 through the scale trapping unit outlet pipe 117.

When the trapping ability of the attaching bodies 7 decreases as the scale attaching proceeds, during a period where heating is not carried out, the flow channel opening/closing valves 115 and 116 are closed and the flow channel opening/closing valves 113 and 114 are opened. Tap water is introduced from the tap water feed pipe 111.

The flow of the tap water pushes the movable body 21 above the partition 18 upward. This movement of the movable body 21 pushes the movable shaft 12 and the contact body 17 upward to stretch (elastically deform) the attaching bodies 7, in order to peel the scales attaching to the attaching bodies 7.

The tap water fed from the tap water feed pipe 111 is introduced to the space below the partition 18 of the scale trapping unit 109-14 through the tap water inlet pipe 20. While the tap water moves the contact body 17 upward to peel the scales as described above, the peeled scales are discharged from the scale discharge pipe 112 through the scale reservoir 6.

As in Embodiment 14, when water flow and the contact body 17 are used, the contact body 17 comes into contact with the surfaces of the attaching bodies. Also, the attaching bodies 7 stretch and collide against each other. Thus, the scales attaching to the attaching bodies 7 can be peeled from the attaching bodies 7. When the peeled scales are discharged by the tap water, the scale trapping ability can be restored with a simple device and at a low cost without requiring power for peeling.

In Fig. 23, the contact body 17 is pushed upward in the attaching body holding container 8 for the purpose of peeling the scales from the attaching bodies 7. However, peeling is not limited to this. Any other peeling method can be employed as far as it can stretch the attaching bodies 7, thereby peeling the scales attaching to the attaching bodies 7. The same effect can be obtained by, for example, performing an operation of not only pushing the contact body 17 upward but vertically moving the contact body 17 or repeating the vertical movement of the contact body 17.

Also, in Fig. 23, the partition 18 is employed, and the movable body 21 is pushed upward by the partition 18. However, the structure is not limited to this. Any other structure can be employed as far as it can move the movable body by the function of the water flow.

### Embodiment 15

### Manual Mode, Supplementary Explanation on Cleaning Time and Frequency, and on Material of Attaching Body

In Embodiments 10 to 12, the scales are peeled from the attaching bodies 7 automatically using the rotary motor 11. However, peeling is not limited to this. For example, in place of the motor, a mechanism may be provided in which the rotary portion is rotated and the movable portion is vertically moved manually. This mechanism may be operated manually by the user or a person in charge of maintenance.

In Embodiments 8 to 14 (inflow of tap water), as the scale attaching proceeds, "when the trapping ability of the attaching bodies 7 decreases", the scales are peeled from the attaching bodies 7 in the scale trapping unit and are discharged to the outside of the water circuit. However, scale discharge is not limited to this. Even when the trapping ability of the attaching bodies 7 does not decrease, scale peeling and discharge may be conducted periodically. For example, scale peeling and discharge operation may be conducted immediately after heating, or once a week.

Scale peeling and discharge can be performed automatically by estimating the period to conduct the operation from a change in temperature in the hot water tank 102 or flow rate of the water. When the operation is to be conducted manually, the user may be informed of the period to conduct the operation. Regarding "when the trapping ability of the attaching bodies 7 decreases", this is determined in the following manner.

When the scale trapping unit 109 traps the scales, the resistance of watercourse of the scale trapping unit 109 increases gradually. When the trapping ability of the scale trapping unit 109 decreases, the scales become difficult to trap. Then, the increase in resistance of watercourse becomes slow and approaches to a constant value. The "decrease in the trapping ability of the attaching bodies 7" can be discriminated from this event.

The resistance of watercourse can also be obtained from the flow rate and the pressure values before and after (at the inlet and outlet of the heated water) of the scale trapping unit 109. Alternatively, "when the trapping ability of the attaching bodies 7 is estimated to have decreased" may be determined in advance. When this specific period comes, the scales may be peeled and discharged.

In Embodiments 1 to 14, silicone rubber is employed as the material of the attaching bodies 7. However, the material of the attaching bodies 7 is not limited to this. Any material can be employed as far as it has good affinity for scales, is not denatured or broken depending on the applied temperature condition, and does not have an adverse effect on the human body.

For example, among resins, polyethylene, polypropylene, polysulfone, polyvinylidene fluoride, polyamide, cellulose acetate, polyacrylonitrile, or polyvinyl chloride may be used; among rubbers, isoprene rubber, butadiene rubber, nitrile rubber, ethylene propylene rubber, or fluororubber may be used; among metals, copper, aluminum, or stainless steel may be used; and among other materials, cellulose (cotton) may be used.

In Embodiments 1 to 14, the particle- or string-type attaching body 7 is used. However, the attaching body 7 is not limited to this. Any type of attaching body can be used as far as it comes into good contact with water and can be held in the scale trapping unit. For example, a fragment type (an attaching body 7 torn apart into fragments), a fiber type, or a mesh type can be used. An arbitrary combination of such types may be employed. Note that "fragment type" refers to a state where the attaching body 7 is torn apart into fragments. For example, when a thin rubber plate (of approximately 0.5 mm to 3.0 mm thickness) is cut into "appropriate shapes" (of approximately 5-mm square) roughly, instead of shapes that can be determined as squares or rectangles, then the resultant pieces are fragments.

### Reference Signs List

- 4: rectifier
- 6: scale reservoir
- 7: attaching body
- 8: attaching body holding container
- 9: rotation shaft
- 10: rotary blade
- 11: rotary motor
- 12: movable shaft
- 13: rotary/linear converter
- 15: movable body
- 16: contact body
- 17: contact body
- 18: partition
- 19: rotator
- 20: tap water inlet pipe
- 21: movable body
- 22: partition
- 101: heat source
- 102: hot water tank
- 103: tap water pipe
- 104: hot water pipe
- 105: heat exchanger inlet pipe
- 106: scale trapping unit inlet pipe
- 107: circulation pump
- 108: plate-type heat exchanger
- 109: scale trapping unit
- 110: circulation pipe
- 111: tap water feed pipe
- 112: scale discharge pipe
- 113: flow channel opening/closing valve
- 114: flow channel opening/closing valve
- 115: flow channel opening/closing valve
- 116: flow channel opening/closing valve
- 117: scale trapping unit outlet pipe
- 118: circulation pipe (2)
- 119: heat exchanger (2)
- 120: heating system
- 121: heating circulation pipe
- 122: circulation pump (2)
- 123: selector valve
- 210, 220, 230, 240, 250: peeling mechanism
- 300: intermediate circuit
- 400: water circuit
- 1001, 1002, 1003, 1004: heating device

## Claims

1. A scale removal method comprising:
an attaching step of returning, to a water reserving tank, heated water that has been heated upon flowing into a heat exchange device from a water reserving tank and that has flowed out of the heat exchange device and is returning to the tank, by causing the heated water to pass through a storage container that stores a scale attaching body having a function of letting a scale attach thereto, thereby attaching the scale contained in the heated water to the scale attaching body.

2. The scale removal method according to claim 1,
further comprising:
- a peeling step of stopping the heated water from passing through the storage container and peeling the scale from the scale attaching body to which the scale attaches; and
- a discharge step of discharging the scale peeled, to an outside of the storage container while the heated water stops passing through the storage container.

3. The scale removal method according to claim 2,
wherein the discharge step comprises discharging the scale peeled to the outside of the storage container by causing a fluid different from the heated water to pass through the storage container.

4. The scale removal method according to claim 2,
wherein the peeling step comprises peeling the scale from the scale attaching body to which the scale attaches, by causing a fluid different from the heated water to pass through the storage container.

5. The scale removal method according to claim 4,
wherein the discharge step comprises discharging, by the fluid, the scale peeled to the outside of the storage container.

6. The scale removal method according to claim 2,
wherein the peeling step comprises peeling the scale from the scale attaching body to which the scale attaches, by applying at least either one of impact and elastic deformation to the scale attaching body by a peeling mechanism arranged inside the storage container.

7. The scale removal method according to claim 2,
wherein the peeling step comprises peeling the scale from the scale attaching body to which the scale attaches, by scrubbing a surface of the scale attaching body with a peeling mechanism arranged in the storage container.

8. The scale removal method according to claim 2,
further comprising:
a reserving step of reserving the scale peeled from the scale attaching body in the peeling step, in a scale reservoir formed in the storage container,
wherein the discharge step comprises
discharging the scale reserved in the scale reservoir to the outside of the storage container by causing a fluid different from the heated water to pass through the storage container.

9. The scale removal method according to claim 2,
wherein the peeling step comprises
causing a fluid different from the heated water to pass through the storage container, actuating a peeling mechanism arranged in the storage container by the fluid, and peeling by the peeling mechanism the scale from the scale attaching body to which the scale attaches, and wherein the discharge step comprises
discharging the scale peeled by the peeling mechanism, to the outside of the storage container by the fluid.

10. The scale removal method according to any one of claims I to 9,
wherein the attaching step comprises
promoting growth of the scale attaching to the scale attaching body, by causing the heated water having not less than a predetermined temperature to pass through the storage container.

11. The scale removal method according to any one of claims 1 to 10,
wherein the scale attaching body stored in the storage container is of a type that is one or a combination of a particle type, a string type, a mesh type, a fleck type, and a fiber type.

12. The scale removal method according to any one of claims 1 to 11,
further comprising:
a pulsation step of pulsating the heated water passing through at least the heat exchange device.

13. A scale removal device comprising:
- a water circuit in which a water reserving tank and a heat exchange device are connected to each other by a pipe in which water from the tank toward the heat exchange device flows and a pipe in which heated water heated by the heat exchange device and flowing out from the heat exchange device toward the tank flows; and
- a storage container arranged midway along the pipe in which the heated water toward the tank flows and storing a scale attaching body having a function of letting a scale attach thereto, the storage container serving to pass the heated water so as to be returned to the tank, so that the scale contained in the heated water attaches to the scale attaching body.

14. The scale removal device according to claim 13,
further comprising:
- a stopping part which stops the heated water from passing through the storage container;
- a peeling part which peels the scale from the scale attaching body to which the scale attaches, while the stopping part stops passing the heated water through the storage container; and
- a discharge part which discharges the scale peeled by the peeling part to an outside of the storage container while the stopping part stops passing the heated water passing through the storage container.

15. The scale removal device according to claim 13 or 14,
wherein the storage container detachably stores the scale attaching body.
